# EUROPEAN PATENT APPLICATION

(11) **EP 3 871 905 A1**
(43) Date of publication of application: **01.09.2021**
(21) Application number: 21159729.9
(22) Date of filing: 26.02.2021
(51) Int. Cl.: B60C 11/12, B29D 30/06

(54) **REINFORCED TIRE SIPE BLADE**

(30) Priority: 28.02.2020 US 202062982866 P
(71) Applicant: Bridgestone Americas Tire Operations, LLC, Nashville, TN 37201 (US)
(72) Inventor: SEVERYN, David Matthew, Uniontown, Ohio 44685 (US); RICKS, Seth Montgomery, Canton, Ohio 44721 (US); GEHRES, Justin Michael, Uniontown, Ohio 44685 (US)
(74) Representative: Oxley, Robin John George

(57) **Abstract**

A tire sipe blade is provided comprising a mold engagement portion and a molding portion. The mold engagement portion and the molding portion comprise a first reinforced end portion having a circumferential thickness **T_{R1}.** A first tapered portion extends from the first reinforced end portion and has an axial length **L_{T1}.** An unreinforced main portion extends from the first tapered portion and has a circumferential thickness **T_{U},** wherein the thickness **T_{R1}** is greater than the thickness **T_{U}.** Additionally, a circumferential thickness of the first tapered portion decreases along its length **L_{T1},** from the first reinforced end portion to the unreinforced main portion, from the thickness **T_{R1}** to the thickness **T_{U}.**

## Description

### CROSS-REFERENCE TO RELATED APPLICATIONS

This application claims priority from U.S. Provisional Patent Application No. 62/982,866, filed on 28 February 2020, which is incorporated by reference herein in its entirety.

### BACKGROUND

Tire sipes are formed in a tire via the use of tire sipe blades during the tire molding and curing process. Tire sipe blades endure various loads during tire mold production and tire molding. For example, such loads may be exerted on a sipe blade during one or more of a tire mold casting, a tire de-molding, or a tire mold cleaning. Sipe blades arranged at certain positions on a tire mold may be at risk of a failure upon application of such loads, including one or both of a material yield or a fracture. For example, due to a curvature of a radially inner surface of a shoulder-forming portion of a tire mold, a sipe blade engaged at this portion may not wholly engage within the tire mold. Specifically, an axially outer portion of the sipe blade may not be supported by the mold or by another molding component, and thus, the portion may be susceptible to a material yield or a failure upon loading.

What is needed is a sipe blade having at least one reinforced portion comprising an increased sipe blade thickness at a location vulnerable to sipe blade failure upon a loading.

### SUMMARY

In one implementation, a tire sipe blade is provided comprising a mold engagement portion and a molding portion. The mold engagement portion and the molding portion comprise a first reinforced end portion having a circumferential thickness **T_{R1}.** A first tapered portion extends from the first reinforced end portion and has an axial length **L_{T1}.** An unreinforced main portion extends from the first tapered portion and has a circumferential thickness **Tu,** wherein the thickness **T_{R1}** is greater than the thickness **Tu.** Additionally, a circumferential thickness of the first tapered portion decreases along its length **L_{T1}**, from the first reinforced end portion to the unreinforced main portion, from the thickness **T_{R1}** to the thickness **Tu.**

In another implementation, a tire sipe blade is provided comprising a mold engagement portion and a molding portion. The mold engagement portion and the molding portion comprise a first reinforced end portion having a circumferential thickness **T_{R1}.** A first tapered portion extends from the first reinforced end portion and has an axial length **L_{T1}**. An unreinforced main portion extends from the first tapered portion and has an axial length **L_{U}** and a circumferential thickness **T_{U}**, wherein the thickness **T_{R1}** is greater than the thickness **Tu.** A circumferential thickness of the first tapered portion decreases along its length **L_{T1}**, from the first reinforced end portion to the unreinforced main portion, from the thickness **T_{R1}** to the thickness **Tu.** The sipe blade further comprises a central reinforced portion having a first end and a second end separated from the first reinforced end portion by an axial distance **D,** wherein the sipe blade has an axial length **L_{B}** and the distance **D** is less than the length **L_{B}**. A first central tapered portion extends from the first end of the central reinforced portion to the unreinforced main portion. A second central tapered portion extends from the second end of the central reinforced portion to the unreinforced main portion.

In a further implementation, a tire sipe blade is provided comprising a mold engagement portion and a molding portion. The mold engagement portion and the molding portion comprise a first reinforced end portion having a circumferential thickness **T_{R1}.** A first tapered portion extends from the first reinforced end portion and has an axial length **L_{T1}**. An unreinforced main portion extends from the first tapered portion and has a circumferential thickness **T_{U}**, wherein the thickness **T_{R1}** is greater than the thickness **Tu.** A circumferential thickness of the first tapered portion decreases along its length **L_{T1}**, from the first reinforced end portion to the unreinforced main portion, from the thickness **T_{R1}** to the thickness **Tu.** A second tapered portion extends from the unreinforced main portion and has an axial length **L_{T2}**. A second reinforced end portion extends from the second tapered portion and has a circumferential thickness **T_{R2}**, wherein the thickness **T_{R2}** is greater than the thickness **Tu.** A circumferential thickness of the second tapered portion increases along its length **L_{T2}**, from the unreinforced main portion to the second reinforced end portion, from the thickness **T_{U}** to the thickness **T_{R2}**.

### BRIEF DESCRIPTION OF DRAWINGS

Features, objects, and advantages other than those set forth above will become more readily apparent when consideration is given to the detailed description below. Such detailed description makes reference to the following drawings.
**FIG. 1A** depicts a section view of a tire mold.
**FIG. 1B** depicts a section view of a tire mold.
**FIG. 2** depicts an elevation view of a reinforced tire sipe blade.
**FIG. 3A** depicts an elevation view of a reinforced tire sipe blade.
**FIG. 3B** depicts a plan view of the sipe blade of **FIG. 3A****.**
**FIG. 3C** depicts a partial plan view of the sipe blade of **FIG. 3B****.**
**FIG. 4A** depicts an elevation view of a reinforced tire sipe blade.
**FIG. 4B** depicts a plan view of the sipe blade of **FIG. 4A****.**
**FIG. 4C** depicts a partial plan view of the sipe blade of **FIG. 4B****.**
**FIG. 4D** depicts a partial plan view of the sipe blade of **FIG. 4B****.**
**FIG. 5A** depicts an elevation view of a reinforced tire sipe blade.
**FIG. 5B** depicts a plan view of the sipe blade of **FIG. 5A****.**
**FIG. 5C** depicts a partial plan view of the sipe blade of **FIG. 5B****.**
**FIG. 5D** depicts a partial plan view of the sipe blade of **FIG. 5B****.**
**FIG. 6A** depicts an elevation view of a reinforced tire sipe blade.
**FIG. 6B** depicts a plan view of the sipe blade of **FIG. 6A****.**
**FIG. 6C** depicts a partial plan view of the sipe blade of **FIG. 6B****.**
**FIG. 6D** depicts a partial plan view of the sipe blade of **FIG. 6B****.**
**FIG. 6E** depicts a partial plan view of the sipe blade of **FIG. 6B****.**

### DETAILED DESCRIPTION

The structures illustrated in the drawings include implementations of the features recited in the claims. The illustrated structures thus include implementations of how a person of ordinary skill in the art can make and use the claimed implementations. These implementations are described to meet the enablement and best mode requirements of the patent statue without imposing limitations that are not recited in the claims. One or more of the features of one implementation may be used in combination with, or as a substitute for, one or more features of another as needed for any particular implementation of the implementations described herein.

A conventional tire sipe blade may be manufactured by stamping a sheet of a material having a substantially constant material thickness. In this disclosure, the term "substantially" is defined as largely, but not necessarily wholly what is specified (and includes what is specified; e.g., substantially constant includes constant), as understood by a person of ordinary skill in the art. The sheet of the material may possess material properties to provide a desired strength, stability, and durability to the sipe blade. For example, the material may comprise a stainless steel. Alternatively, a sipe blade may be manufactured by three-dimensional printing methods using similar materials configured for use in three-dimensional printers. Regardless of a desired shape of a sipe blade, such as one of substantially linear or curvilinear, after manufacture a stamped sipe blade possesses a substantially constant material thickness along an axial length and a radial height of the sipe blade, wherein the thickness of the stamped sipe blade is less than the material thickness of the sheet of the material.

When stamping a sheet of a material to manufacture a reinforced tire sipe blade, a resulting reinforced sipe blade comprises at least one reinforced portion and at least one unreinforced portion. The at least one reinforced portion of the sipe blade retains one of a material thickness of the sheet of the material or a material thickness that is less than the sheet of the material. The at least one unreinforced portion comprises a material thickness that is less than the material thickness of the at least one reinforced portion. That is, the at least one unreinforced portion is thinner than the at least one reinforced portion. For example, the at least one reinforced portion may comprise a material thickness of 1.00 mm, while the unreinforced portion may comprise a material thickness of 0.60 mm.

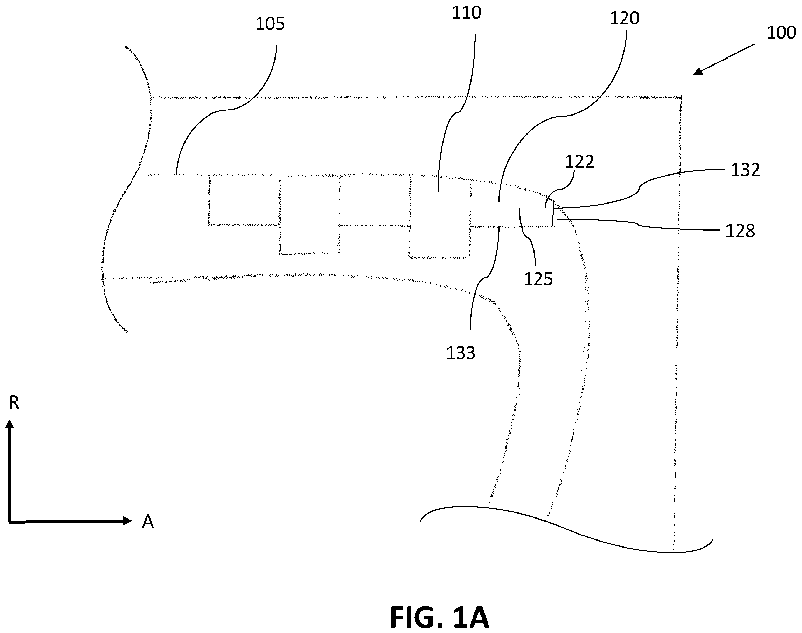

**FIGS. 1A-6E** include axes identified as **"C," "R,"** or **"A."** The **C**-axis represents a circumferential direction in a tire mold **100** corresponding to a circumferential direction of a tire. The **R-axis** represents a radial direction in the mold **100** corresponding to a radial direction of a tire. The **A**-axis represents an axial direction in the mold **100** corresponding to an axial direction of a tire.

**FIG. 1A** illustrates a section view of an implementation of a tire mold **100.** The mold **100** comprises a plurality of tire molding components arranged within a radially inner surface **105** of the mold **100.** The term "radially inner" or a variation of the term refers to a position toward a tire molding material in the mold **100** (and likewise toward a radially inner direction/radial center of a tire). The tire molding components may include, but are not limited to, a groove-molding component **110** contiguous to a reinforced tire sipe blade **120** positioned along a circumferential shoulder rib-forming portion of the mold **100.** Alternative implementations of a position of the sipe blade **120** may be contemplated, including along a circumferential intermediate rib-forming portion or along a circumferential center rib-forming portion.

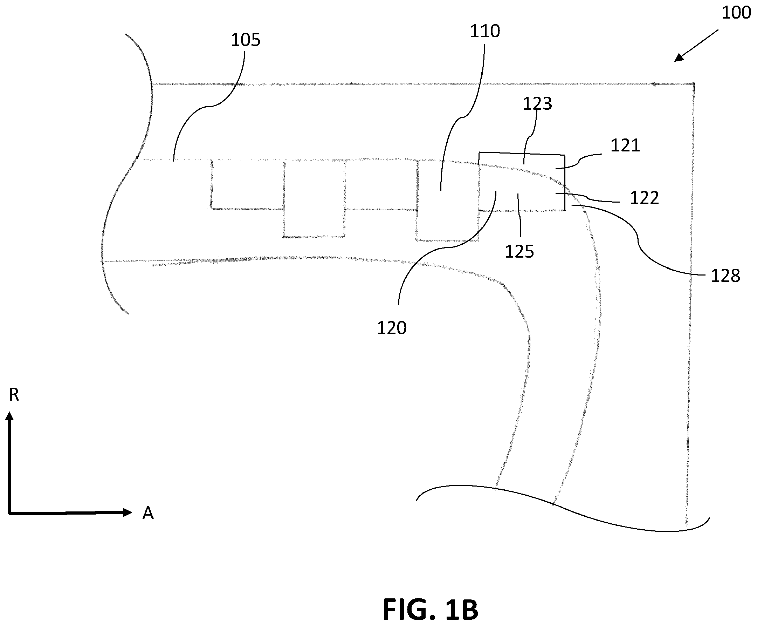

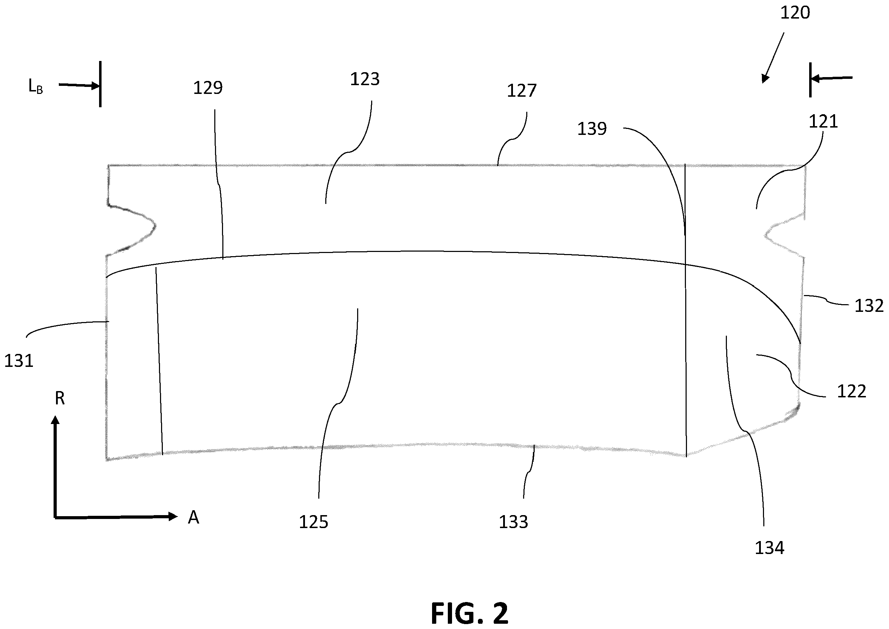

Referring to **FIG. 1B** and **FIG. 2****,** the sipe blade **120** comprises a mold engagement portion **123** and a molding portion **125.** The mold engagement portion **123** comprises a portion of the sipe blade **120** that engages the mold **100** such that it is recessed and secured within the mold **100.** The mold engagement portion **123** comprises a radially outer portion of the sipe blade **120** having an axial length **L_{B}** of the sipe blade **120** that extends axially from an axially inner edge **131** to an axially outer edge **132** of the sipe blade **120.** The term "radially outer" or a variation of the term refers to a position toward an external surface of the mold **100** (and likewise in the direction radially away from the radial center of a tire). The term "axially inner" or a variation of the term refers to a position toward an axial center of the mold **100** (and likewise in a direction toward an axial centerline of a tire). The term "axially outer" or a variation of the term refers to a position away from an axial center of the mold **100** (and likewise in a direction away from the centerline of a tire) and toward a sidewall-forming portion of the mold **100.** The axially inner edge **131** may extend one of parallel to the radial direction **R** or biased relative to the radial direction **R.** The axially outer edge **132** may extend one of parallel to the radial direction **R** or biased relative to the radial direction **R.** The axially inner edge **131** and the axially outer edge **133** may be one of parallel or biased relative to one another.

The molding portion **125** comprises a radially inner portion of the sipe blade **120** extending the length **L_{B}** of the sipe blade **120.** The molding portion **125** comprises a portion of the sipe blade **120** that protrudes radially inwardly from the mold **100** and is exposed to a molding material during a molding of a tire, and thus, forms a sipe within a tread of the tire.

Referring again to **FIG. 2****,** the mold engagement portion **123** includes a radial height **H_{E}** that extends from a radially outer edge **127** of the sipe blade **120** to a radial demarcation line **129.** The radially outer edge **127** may directly engage (or extend into) a radially inner surface of the mold **100** that is associated with the sipe blade **120.** As the radially inner surface of the mold **100** may curve along its length, the radially outer edge **127** may correspondingly curve along its length, which enables the sipe blade **120** to properly and securely engage within the mold **100.** Alternatively, the radially outer edge **127** may be straight as illustrated in **FIG. 2****.**

The radial demarcation line **129** represents a radial demarcation between the mold engagement portion **123** and the molding portion **125.** Because a radially inner edge **105** of the mold **100** at the shoulder-forming portion may include a curvature, the radial demarcation line **129** may mimic the curvature as it extends axially along the sipe blade **120.** Thus, the radial height **H_{E}** of the mold engagement portion **123** may vary along the length **L_{B}** of the sipe blade **120.**

The molding portion **125** includes a radial height **H_{M}** that extends from the radial demarcation line **129** to a radially inner edge **133** of the sipe blade **120.** The radially inner edge **133** may form a bottom surface of a sipe in a tire tread upon molding of a tire. As the radial demarcation line **129** may mimic the curvature of the radially inner surface of the mold **100** as it extends axially along the sipe blade **120,** the radial height **H_{M}** of the molding portion **125** may vary along the length **L_{B}** of the sipe blade **120.**

While engaged within the mold **100,** as illustrated in **FIGS. 1A** and **1B****,** an axially outer portion **121** of the mold engagement portion **123** is coupled to the mold **100.** Specifically, the axially outer portion **121** is coupled to the mold **100** by both a radially outer edge and an axially outer edge, which creates a "fixed end."

A corresponding axially outer portion **122** of the molding portion **125** protrudes radially inwardly from the mold **100,** and thus, a radially inner edge and an axially outer edge are unsupported by a molding component or the mold **100.** This is a result of a position of the sipe blade **120** at a shoulder-forming portion of the mold **100.** As the shoulder-forming portion transitions to a sidewall-forming portion of the mold **100,** the radially inner surface **105** of the mold **100** comprises a curvature. The axially outer portion **122** of the molding portion **125** of the sipe blade **120** does not engage within the radially inner surface **105** of the mold **100** where the shoulder-forming portion transitions to the sidewall-forming portion. Accordingly, a void **128** is created between the axially outer portion **122** of the molding portion **125** of the sipe blade **120** and the radially inner surface of the shoulder-forming portion of the mold **100.**

In effect, the axially outer portion **122** of the molding portion **125** is cantilevered from the "fixed end," or axially outer portion **121** of the mold engagement portion **123.** Thus, the axially outer portion **122** of the molding portion **125** may bear a maximum of a load exerted on the axially outer portions **121** and **122** of the sipe blade **120.** This phenomenon makes the axially outer portion **122** of the molding portion **125** particularly vulnerable to a material yield and a failure, including a shear failure and a tensile failure, during a tire mold production or a tire molding, including one or more of a tire mold casting, a tire mold casting, a tire de-molding, or the like. To prevent a failure, the sipe blade **120** is reinforced along the axially outer portion **121** of the mold engagement portion **123** and the axially outer portion **122** of the molding portion **125.** Such reinforcement may reduce a force, such as pressure, exerted on the sipe blade **120** by between about 17% and 30%. Other portions along a length and height of a sipe blade may also be reinforced to prevent a failure or if desired, as further described below.

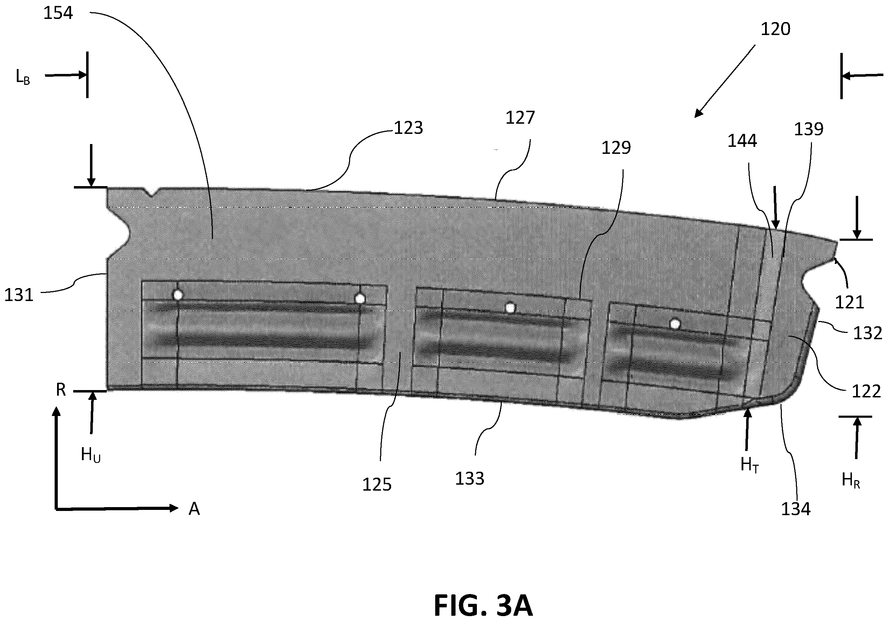

In a first implementation, as shown in **FIGS. 3A-3C****,** the reinforced sipe blade **120** may include a reinforced end portion **134.** The reinforced end portion **134** may comprise the axially outer portions **121** and **122,** which require reinforcement, or an increased thickness, to prevent a material yield or a material failure of sipe blade **120** during a tire production or a tire molding, including one or more of a tire mold casting, a tire mold casting, a tire de-molding, or the like.

The reinforced end portion **134** has an axial length **L_{R}** that extends from the axially outer edge **132** of the sipe blade **120** to an axial demarcation line **139.** The axial demarcation line **139** extends from the radially outer edge **127** to the radially inner edge of **133** the sipe blade **120,** and indicates an axially inner boundary of the reinforced end portion **134.** The axial demarcation line **139** may be one of parallel to the radial direction **R** or biased relative to the radial direction **R.** The axial demarcation line **139** may be one of parallel or biased relative to the axially outer edge **132.** If the axial demarcation line **139** is biased relative to the axially outer edge **132,** then the length **L_{R}** of the reinforced end portion **134** may vary along a radial height of the sipe blade **120.**

The length **L_{R}** of the reinforced end portion **134** is less than the length **L_{B}** of the sipe blade **120.** The length **L_{B}** extends between the axially inner edge **131** and the axially outer edge **132** of the sipe blade **120.** The length **L_{B}** corresponds to a length of conventional sipe blades.

A radial height **H_{R}** of the reinforced sipe blade **120** extends from the radially outer edge **127** to the radially inner edge **133** of the sipe blade **120.** In some implementations, the height **H_{R}** corresponds to a radial height of conventional sipe blades.

A circumferential thickness **T_{R}** of the reinforced end portion **134** may be substantially constant along its height **H_{R}**. The term "circumferential thickness" refers to a width of the sipe blade **120** in the circumferential direction **C.** As the reinforced end portion **134** is vulnerable to a failure, the thickness **T_{R}** must be great enough to provide a desired strength and a durability to the sipe blade **120** at this portion **134.** In some implementations, the thickness **T_{R}** is 1.0 mm.

A tapered portion **144** extends axially inwardly from the reinforced end portion **134** at the axial demarcation line **139** to an axially outer end of an unreinforced main portion **154,** which corresponds to its axial length **L_{T}**. In some implementations, the length **L_{T}** is 1.0 mm.

A radial height **H_{T}** of the tapered portion **144** extends from the radially outer edge **127** to the radially inner edge **133** of the sipe blade **120.** In some implementations, the height **H_{T}** corresponds to the height **H_{R}** of the reinforced end portion **134.** In other implementations, the height **H_{T}** is commensurate with a radial height of conventional sipe blades.

A circumferential thickness of the tapered portion **144** decreases or "tapers" along its length **L_{T}**. The thickness decreases from the thickness **T_{R}** of the reinforced end portion **134** to a thickness **T_{U}** of the unreinforced main portion **154,** wherein the thickness **T_{R}** is greater than the thickness **Tu.** The sipe blade **120** includes the tapered portion **144** to avoid a stress concentration between the reinforced end portion **134** and the unreinforced main portion **154.** This gradual change in thickness more evenly distributes forces acting over an area of the tapered portion **144,** which prevents a failure at the tapered portion **144.** In some implementations, the thickness **T_{U}** is 0.60 mm.

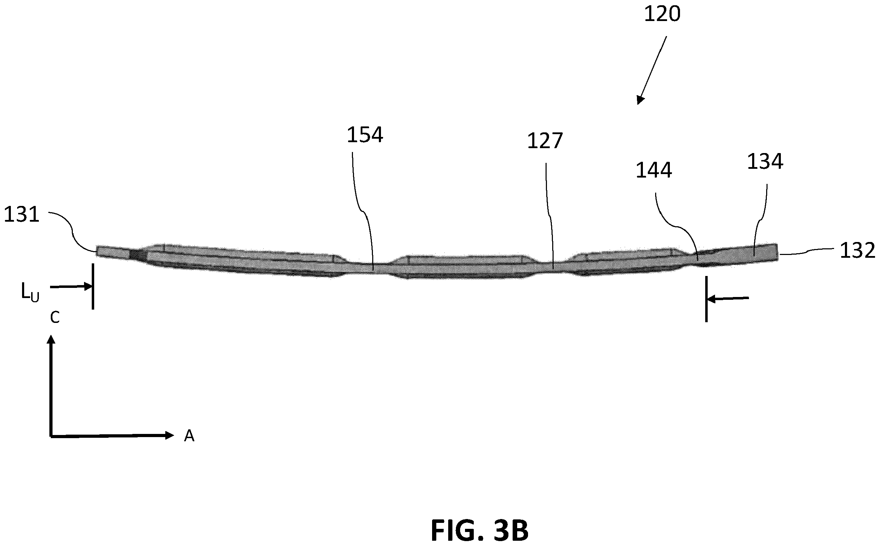

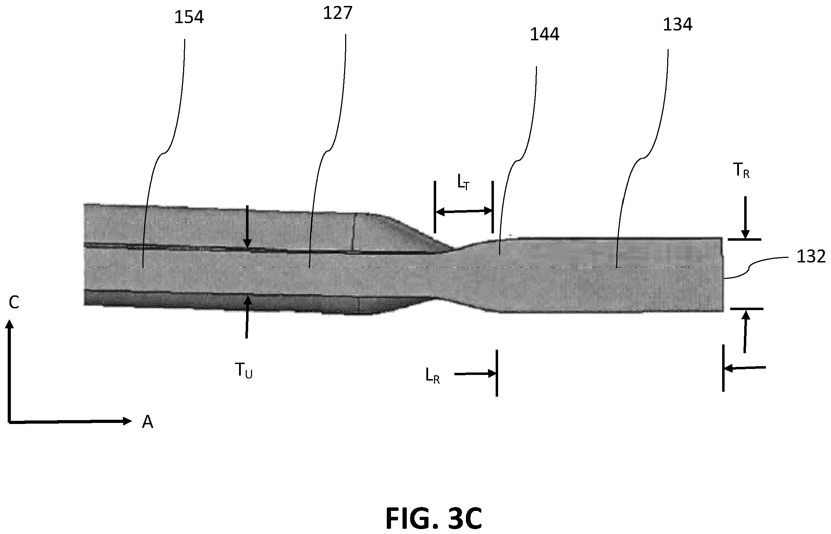

The unreinforced main portion **154,** as illustrated in **FIGS. 3B** and **3C****,** extends axially inwardly from an axially inner end of the tapered portion **144** and comprises a remaining axial length **L_{U}** of the sipe blade **120.** That is, the remaining length **L_{U}** extends axially inwardly from an axially inner end of the tapered portion **144** to the axially inner edge **131** of the sipe blade **120.**

The unreinforced main portion **154** has a radial height **H_{U}** that extends from the radially outer edge **127** to the radially inner edge **133** of the sipe blade **120.** In some implementations, the height **H_{U}** corresponds to a radial height of conventional sipe blades. In other implementations, the height **H_{U}** is commensurate with the height **H_{R}** of the reinforced end portion **134.** In additional implementations, the height **H_{U}** is commensurate with the height **H_{T}** of the tapered portion **144.**

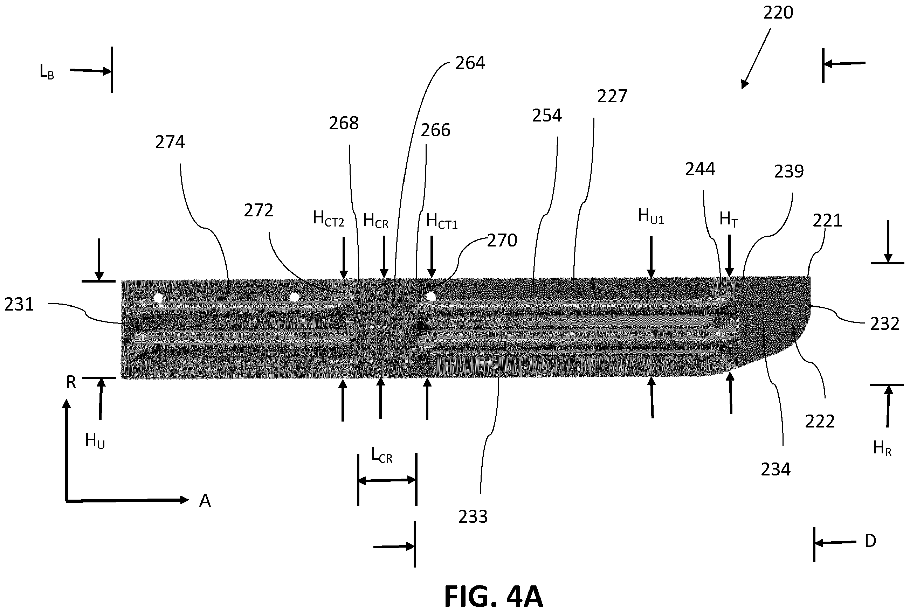

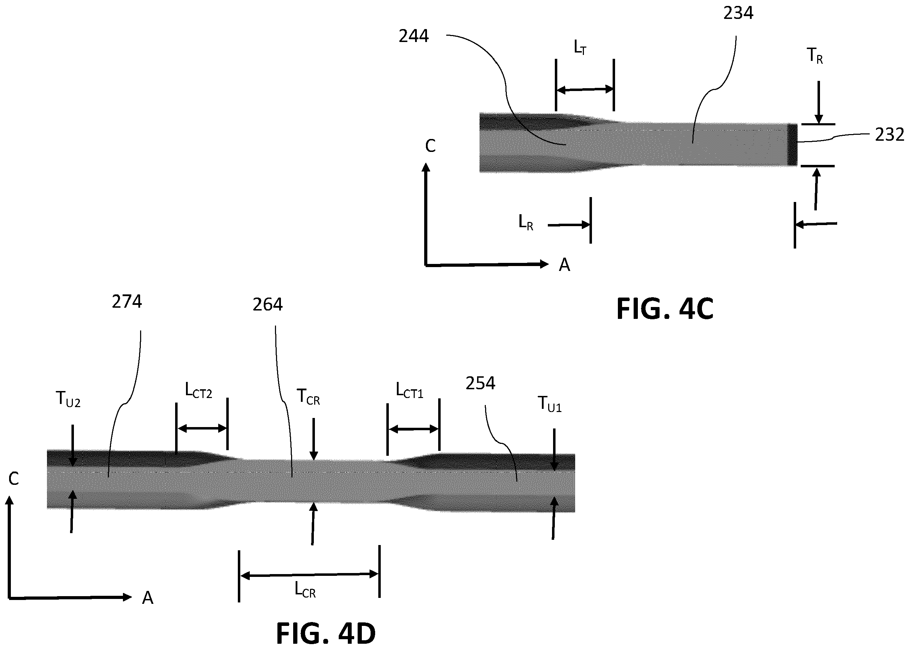

**FIGS. 4A-4D** depict a second implementation of a reinforced sipe blade **220.** In the figures, like numerals represent features corresponding structurally and functionally to features in the first implementation. The sipe blade **220** may include a reinforced end portion **234.** The reinforced end portion **234** may comprise axially outer portions **221** and **222,** which require reinforcement, or an increased thickness, to prevent a material yield or a material failure during one or more of a tire production or a tire molding, including one or more of a tire mold casting, a tire mold casting, a tire de-molding, or the like.

The reinforced end portion **234** has an axial length **L_{R}** that extends from the axially outer edge **232** of the sipe blade **220** to an axial demarcation line **239.** The axial demarcation line **239** extends radially from the radially outer edge **227** to the radially inner edge of the sipe blade **220,** and indicates an axially inner boundary of the reinforced end portion **234.** The axial demarcation line **239** may be one of parallel to the radial direction **R** or biased relative to the radial direction **R.** The axial demarcation line **239** may be one of parallel or biased relative to the axially outer edge **232.** If the axial demarcation line **239** is biased relative to the axially outer edge **232,** then the length **L_{R}** of the reinforced end portion **234** may vary along a radial height of the sipe blade **220.**

The length **L_{R}** of the reinforced end portion **234** is less than an axial length **L_{B}** of the sipe blade **220.** The length **L_{B}** extends axially between an axially inner edge **231** and an axially outer edge **232** of the sipe blade **220.** In some implementations, the length **L_{B}** corresponds to a length of conventional sipe blades.

A radial height **H_{R}** of the reinforced end portion **234** extends from the radially outer edge **227** to the radially inner edge **233** of the sipe blade **220.** In some implementations, the height **H_{R}** corresponds to a radial height of conventional sipe blades.

A circumferential thickness **T_{R}** of the reinforced end portion **234** may be substantially constant along its height **H_{R}.** As the reinforced end portion **234** is vulnerable to a failure, the thickness **T_{R}** must be great enough to provide a desired strength and a durability to the sipe blade **220** at this portion **234.** In some implementations, the thickness **T_{R}** is 1.0 mm.

A tapered portion **244** extends axially inwardly from the reinforced end portion **234** at the axial demarcation line **239** to an axially outer end of a first unreinforced main portion **254,** which corresponds to its axial length **L_{T}**. In some implementations, the length **L_{T}** is 1.0 mm.

A radial height **H_{T}** of the tapered portion **244** extends from the radially outer edge **227** to the radially inner edge **233** of the sipe blade **220.** In some implementations, the height **H_{T}** corresponds to the height **H_{R}** of the reinforced end portion **234.** In other implementations, the height **H_{T}** is commensurate with a radial height of conventional sipe blades.

A circumferential thickness of the tapered portion **244** decreases or "tapers" along its length **L_{T}**. The thickness decreases from the thickness **T_{R}** of the reinforced end portion **234** to a thickness **T_{U1}** of the first unreinforced main portion **254,** wherein the thickness **T_{R}** is greater than the thickness **T_{U1}**. The sipe blade **220** includes the tapered portion **244** to avoid a stress concentration between the reinforced end portion **234** and the first unreinforced main portion **254.** This gradual change in thickness more evenly distributes forces acting over an area of the tapered portion **244,** which prevents a failure at the tapered portion **244.** In some implementations, the thickness **T_{U1}** is 0.60 mm.

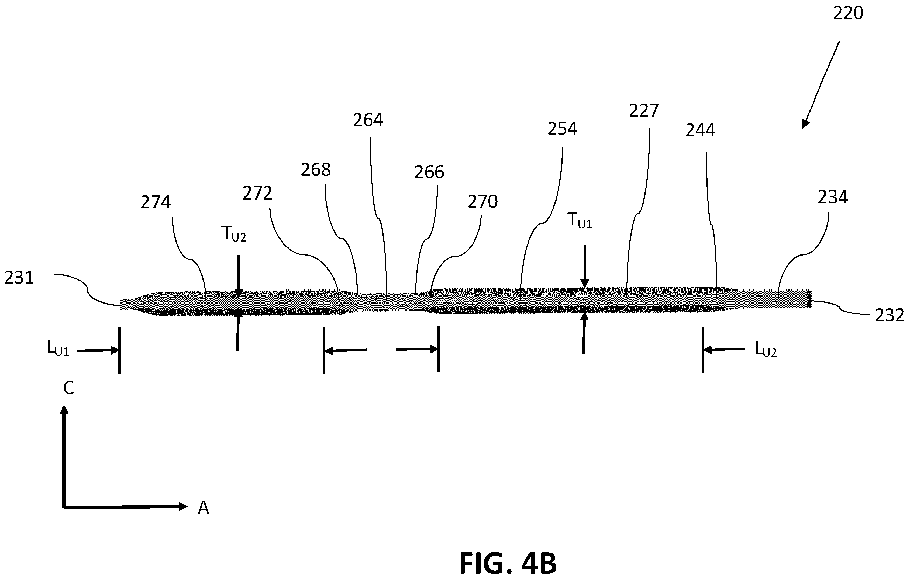

As illustrated in **FIGS. 4B** and **4C****,** the first unreinforced main portion **254** extends axially inwardly from an axially inner end of the tapered portion **244.** An axial length **L_{U1}** of the first unreinforced main portion **254** extends axially inwardly from the axially inner end of the tapered portion **244** to about a central reinforced portion **264.**

The first unreinforced main portion **254** has a radial height **H_{U1}** that extends from the radially outer edge **227** to the radially inner edge **233** of the sipe blade **220.** In some implementations, the height **H_{U1}** corresponds to a radial height of conventional sipe blades.

The central reinforced portion **264** is substantially similar to the reinforced end portion **234.** The term "central" in "central reinforced portion" indicates that the central reinforced portion **264** may be positioned at any location between the axially inner end of the tapered portion **244** and the axially inner edge **231** of the sipe blade **220.** Its position is not required to be located at a midpoint of the length **L_{B}** of the sipe blade **220.**

Reinforcement, or a greater thickness, of the sipe blade **200** at the central reinforced portion **264** may be desired, for example, if a portion contiguous or proximate to the central reinforced portion **264** is manufactured to have a thickness that is less than the thickness **T_{U1}** of the first unreinforced portion **254.** Reinforcement, or a greater thickness, of the sipe blade **200** at the central reinforced portion **264** may be also be desired to generally increase a structural robustness of the sipe blade **220.**

The central reinforced portion **264** may have a first end **266** and a second end **268.** The first end **266** is positioned at an axially outer side of the central reinforced portion **264** and defines an axially outer boundary of the central reinforced portion **264.** The second end **268** is positioned at an axially inner side of the central reinforced portion **264** and defines an axially inner boundary of the central reinforced portion **264.**

An axial length **L_{CR}** of the central reinforced portion **264** extends from the first end **266** to the second end **268.** The length **L_{CR}** of the central reinforced portion **264** is less than the length **L_{B}** of the sipe blade **220.** Additionally, the length **L_{CR}** is one of greater than, less than, or substantially equal to the length **L_{R}** of the reinforced end portion **234.**

The central reinforced portion **264** also has a radial height **H_{CR}** that extends from the radially outer edge **227** to the radially inner edge **233** of the sipe blade **220.** In some implementations, the height **H_{CR}** corresponds to a radial height of conventional sipe blades. In other implementations, the height **H_{CR}** is substantially equal to the height **H_{R}** of the first reinforced end portion **234.**

A circumferential thickness **T_{CR}** of the central reinforced portion **264** may be substantially constant along its height **H_{CR}.** As the central reinforced end portion **264** may be vulnerable to a failure, the thickness **T_{CR}** must be great enough to provide a desired strength and a durability to the sipe blade **220** at this portion **264.** In some implementations, the thickness **T_{CR}** is 1.0 mm.

The central reinforced portion **264** may be separated from the reinforced end portion **234** by an axial distance **D.** The distance **D** may be measured from the axially outer edge **232** of the sipe blade **220** to the first end **266** of the central reinforced portion **264.** The distance **D** is less than the length **L_{B}** of the sipe blade **220.**

A first central tapered portion **270** extends axially outwardly from the first end **266** of the central reinforced portion **264** to an axially inner end of the first unreinforced main portion **254.** The first central tapered portion **270** may have an axial length **L_{CT1}** that extends axially from the first end **266** of the central reinforced portion **264** to an axially inner end of the first unreinforced main portion **254.** In some implementations, the length **L_{CT1}** is 1.0 mm. In other implementations, the length **L_{CT1}** may be one of greater than, less than, or substantially equal to the length **L_{T}** of the tapered portion **244.**

A radial height **H_{CT1}** of the first central tapered portion **270** extends from the radially outer edge **227** to the radially inner edge **233** of the sipe blade **220.** In some implementations, the height **H_{CT1}** corresponds to the height **H_{CR}** of the central reinforced portion **264.** In other implementations, the height **H_{CT1}** is commensurate with a radial height of conventional sipe blades.

A circumferential thickness of the first central tapered portion **270** decreases or "tapers" along its length **L_{CT1}.** The thickness decreases from the thickness **T_{CR}** of the central reinforced portion **264** to the thickness **T_{U1}** of the first unreinforced main portion **254,** wherein the thickness **T_{CR}** is greater than the thickness **T_{U1}**. The sipe blade **220** includes the first central tapered portion **270** to avoid a stress concentration between the first unreinforced main portion **254** and the central reinforced portion **264.** This gradual change in thickness more evenly distributes forces acting over an area of the first central tapered portion **270,** which prevents a failure at the first central tapered portion **270.** In some implementations, the thickness **T_{U1}** is 0.60 mm.

A second central tapered portion **272** extends axially inwardly from the second end **268** of the central reinforced portion **264** to an axially outer end of a second unreinforced main portion **274.** An axial length **L_{CT2}** of the second central tapered portion **272** extends from the second end **268** of the central reinforced portion **264** to an axially outer end of the second unreinforced main portion **274.** In some implementations, the length **L_{CT2}** is 1.0 mm. In other implementations, the length **L_{CT2}** is one of greater than, less than, or substantially equal to the length **L_{T}** of the tapered portion **244.** In further implementations, the length **L_{CT2}** is one of greater than, less than, or substantially equal to the length **L_{CT1}** of the first central tapered portion **270.**

A radial height **H_{CT2}** of the second central tapered portion **272** extends from the radially outer edge **227** to the radially inner edge **233** of the sipe blade **220.** In some implementations, the height **H_{CT2}** corresponds to the height **H_{CT1}** of the first central tapered portion **270.** In further implementations, the height **H_{CT2}** corresponds to the height **H_{T}** of the tapered portion **244.** In other implementations, the height **H_{CT2}** corresponds to the height **H_{R}** of the reinforced end portion **234.** In further implementations, the height **H_{CT2}** corresponds to the height **H_{CR}** of the central reinforced portion **264.** In other implementations, the height **H_{CT2}** is commensurate with a radial height of conventional sipe blades.

A circumferential thickness of the second central tapered portion **272** decreases or "tapers" along its length **L_{CT2}.** The thickness decreases from the thickness **T_{CR}** of the central reinforced portion **264** to a thickness **T_{U2}** of the second unreinforced main portion **274,** wherein the thickness **T_{CR}** is greater than the thickness **T_{U2}**. The sipe blade **220** includes the second central tapered portion **272** to avoid a stress concentration between the second unreinforced main portion **274** and the central reinforced portion **264.** This gradual change in thickness more evenly distributes forces acting over an area of the second central tapered portion **272,** which prevents a failure at the second central tapered portion **272.** In some implementations, the thickness **T_{U2}** is 0.60 mm. In other implementations, the thickness **T_{U2}** is one of greater than, less than, or substantially equal to the thickness **T_{U1}** of the first central tapered portion, but less than the thickness **T_{CR}** of the central reinforced portion **264** and the thickness **T_{R}** of the reinforced end portion **234.**

The second unreinforced main portion **274** extends axially inwardly from an axially inner end of the second central tapered portion **272** and comprises a remaining axial length **L_{U2}** of the sipe blade **220.** An axial length **L_{U2}** of the second unreinforced main portion **274** extends axially inwardly from the axially inner end of the second tapered portion **272** to the axially inner edge **232** of the sipe blade **220.** In other implementations, the length **L_{U2}** is one of greater than, less than, or substantially equal to the length **L_{U1}** of the first unreinforced end portion **254.**

The second unreinforced main portion **274** has a radial height **H_{U2}** that extends from the radially outer edge **227** to the radially inner edge **233** of the sipe blade **220.** In some implementations, the height **H_{U2}** corresponds to a radial height of conventional sipe blades. In other implementations, the height **H_{U2}** corresponds to the height **H_{CR}** of the central reinforced portion **264.** In further implementations, the height **H_{U2}** corresponds to the height **H_{CT2}** of the second central tapered portion **272.**

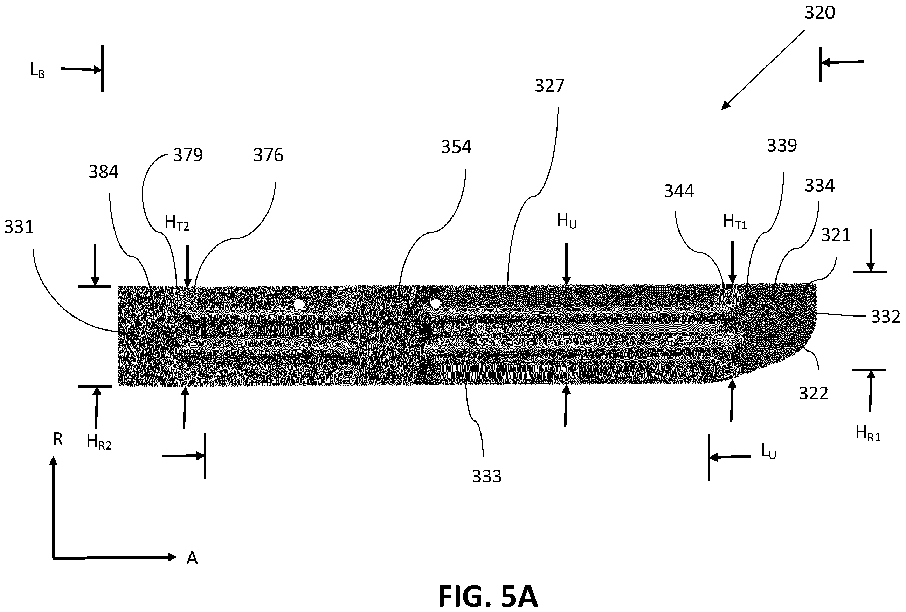

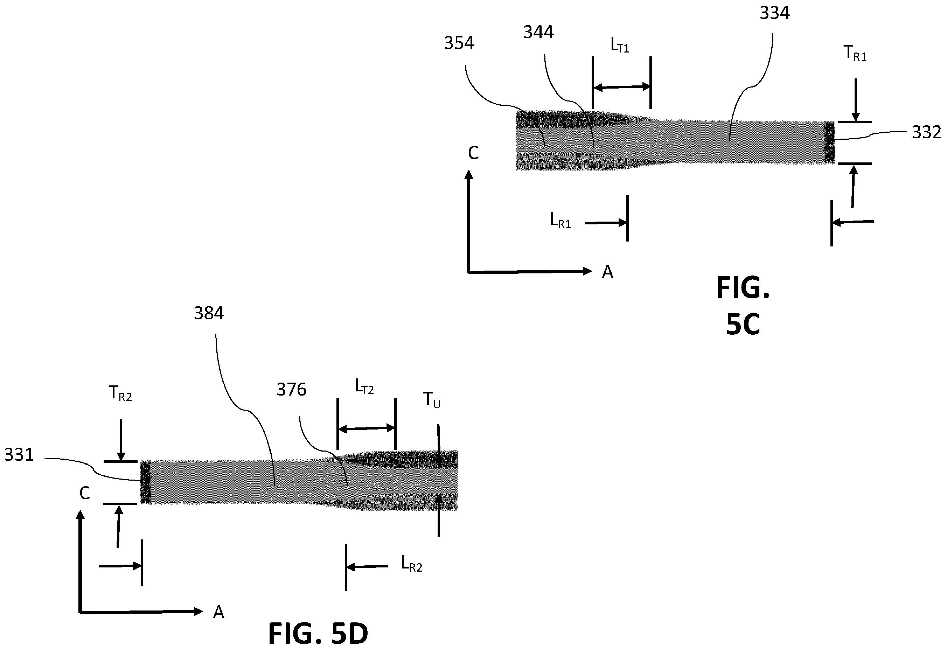

A third implementation of a reinforced sipe blade **320** is depicted in **FIGS. 5A-5D****.** In the figures, like numerals represent features corresponding structurally and functionally to features in the first implementation. The sipe blade **320** may include a first reinforced end portion **334.** The first reinforced end portion **334** may comprise axially outer portions **321** and **322,** which require reinforcement, or an enhanced thickness, to prevent a material yield or a material failure during a tire production or a tire molding, including one or more of a tire mold casting, a tire mold casting, a tire de-molding, or the like.

The first reinforced end portion **334** has an axial length **L_{R1}** that extends from the axially outer edge **332** of the sipe blade **320** to a first axial demarcation line **339.** The first axial demarcation line **339** extends radially from the radially outer edge **327** to the radially inner edge of the sipe blade **320,** and indicates an axially inner boundary of the first reinforced end portion **334.** The first axial demarcation line **339** may be one of parallel to the radial direction **R** or biased relative to the radial direction **R.** The first axial demarcation line **339** may be one of parallel or biased relative to the axially outer edge **332.** If the first axial demarcation line **339** is biased relative to the axially outer edge **332,** then the length **L_{R1}** of the first reinforced end portion **334** may vary along a radial height of the sipe blade **320.**

The length **L_{R1}** of the first reinforced end portion **334** is less than an axial length **L_{B}** of the sipe blade **320.** The length **L_{B}** extends between the axially inner edge **331** and the axially outer edge **332** of the sipe blade **320.** In some implementations, the length **L_{B}** corresponds to a length of conventional sipe blades.

The radial height **H_{R1}** of the first reinforced end portion **334** extends from the radially outer edge **227** to the radially inner edge **233** of the sipe blade **320.** In some implementations, the height **H_{R1}** corresponds to a radial height of conventional sipe blades.

A circumferential thickness **T_{R1}** of the first reinforced end portion **334** may be substantially constant along its height **H_{R1}**. As the first reinforced end portion **334** is vulnerable to a failure, the thickness **T_{R1}** must be great enough to provide a desired strength and a durability to the sipe blade **320** at this portion **334.** In some implementations, the thickness **T_{R1}** is 1.0 mm.

A first tapered portion **344** extends axially inwardly from the first reinforced end portion **334** at the first axial demarcation line **339** to an axially outer end of a first unreinforced main portion **354,** which corresponds to its axial length **L_{T1}**. In some implementations, the length **L_{T1}** is 1.0 mm.

A radial height **H_{T1}** of the first tapered portion **344** extends from the radially outer edge **327** to the radially inner edge **333** of the sipe blade **320.** In some implementations, the height **H_{T1}** corresponds to the height **H_{R1}** of the first reinforced end portion **334.** In other implementations, the height **H_{T1}** is commensurate with a radial height of conventional sipe blades.

A circumferential thickness of the first tapered portion **344** decreases or "tapers" along its length **L_{T1}**. The thickness decreases from the thickness **T_{R1}** of the first reinforced end portion **334** to a thickness **T_{U}** of the unreinforced main portion **354,** wherein the thickness **T_{R1}** is greater than the thickness **Tu.** The sipe blade **320** includes the first tapered portion **344** to avoid a stress concentration between the first reinforced end portion **334** and the unreinforced main portion **354.** This gradual change in thickness more evenly distributes forces acting over an area of the first tapered portion **344,** which prevents a failure at the first tapered portion **344.** In some implementations, the thickness **T_{U}** is 0.60 mm.

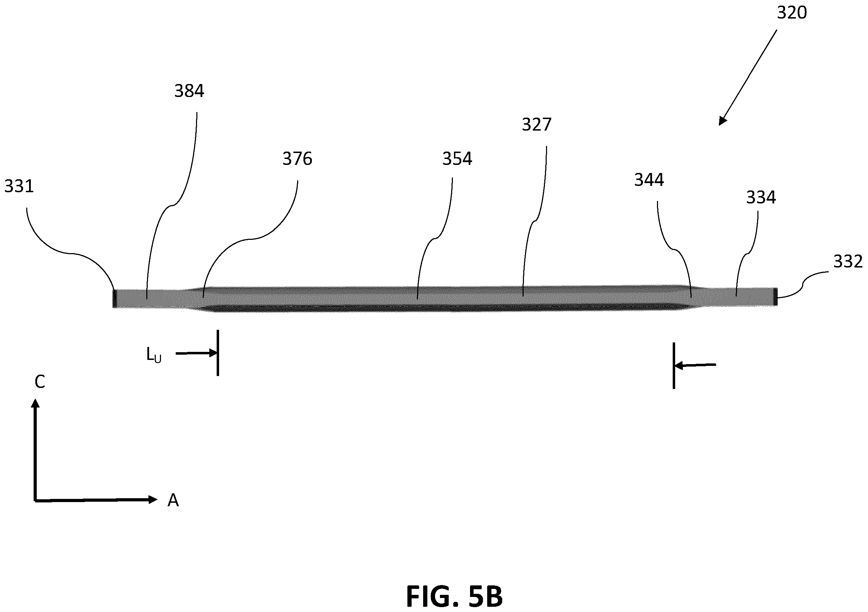

As illustrated in **FIGS. 5B** and **5C****,** the unreinforced main portion **354** extends axially inwardly from an axially inner end of the first tapered portion **344.** An axial length **L_{U}** of the unreinforced main portion **354** extends axially inwardly from the axially inner end of the unreinforced main portion **354** to an axially outer end of a second tapered portion **376.**

The unreinforced main portion **354** has a radial height **H_{U}** that extends from the radially outer edge **327** to the radially inner edge **333** of the sipe blade **320.** In some implementations, the height **H_{U}** corresponds to a radial height of conventional sipe blades.

The second tapered portion **376** extends axially inwardly from the unreinforced main portion **354** to a second axial demarcation line **379,** which corresponds to its axial length **L_{T2}**. In some implementations, the length **L_{T2}** is 1.0 mm. The second axial demarcation line **379** extends radially from the radially outer edge **327** to the radially inner edge of the sipe blade **320,** and indicates an axially outer boundary of the second tapered portion **376.** The second axial demarcation line **379** may be one of parallel to the radial direction **R** or biased relative to the radial direction **R.** The second axial demarcation line **379** may be one of parallel or biased relative to the axially inner edge **333.** If the second axial demarcation line **379** is biased relative to the axially inner edge **333,** then the length **L_{T2}** of the second tapered portion **376** may vary along a radial height of the sipe blade **320.**

A radial height **H_{T2}** of the second tapered portion **376** extends from the radially outer edge **327** to the radially inner edge **333** of the sipe blade **320.** In some implementations, the height **H_{T2}** corresponds to the height **H_{T1}** of the first tapered portion **344.** In other implementations, the height **H_{T2}** is commensurate with a radial height of conventional sipe blades.

A circumferential thickness of the second tapered portion **376** increases along its length **L_{T2}**. The length **L_{T2}** is measured from an axially inner end of the unreinforced main portion **354** to the second axial demarcation line **379.** The thickness of the second tapered portion increases from a circumferential thickness **T_{U}** of the unreinforced main portion **354** to a circumferential thickness **T_{R2}** of a second reinforced end portion **384,** wherein the thickness **T_{R2}** is greater than the thickness **Tu.** The sipe blade **320** includes the second tapered portion **376** to avoid a stress concentration between the unreinforced main portion **354** and the second reinforced end portion **384.** This gradual change in thickness more evenly distributes forces acting over an area of the second tapered portion **376,** which prevents a failure at the second tapered portion **376.** In some implementations, the thickness **T_{U}** is 0.60 mm.

The second reinforced end portion **384** is substantially similar to the first reinforced end portion **334** and is positioned axially opposite relative to the first reinforced end portion **334** at an axially inner side of the sipe blade **320.** Reinforcement, or a greater thickness, of the sipe blade **300** at the second reinforced end portion **384** may be desired, for example, if a portion contiguous or proximate to the second reinforced end portion **384** is manufactured to have a thickness that is less than the thickness **T_{U}** of the unreinforced main portion **354.** Reinforcement, or a greater thickness, of the sipe blade **300** at the second reinforced end portion **384** may be also be desired to generally increase a structural robustness of the sipe blade **300.**

The second reinforced end portion **384** has an axial length **L_{R2}** that extends axially from the second axial demarcation line **379** to an axially inner edge **332** of the sipe blade **320.** If the second axial demarcation line **379** is biased relative to the axially outer edge **332,** then the length **L_{R2}** of the second reinforced end portion **334** may vary along a radial height of the sipe blade **320.**

The length **L_{R2}** of the second reinforced end portion **384** is less than the length **L_{B}** of the sipe blade **320.** In some implementations, the length **L_{B}** corresponds to a length of conventional sipe blades. In further implementations, the length **L_{R2}** is one of greater than, less than, or substantially equal to the length **L_{R1}** of the first reinforced end portion **334.**

A radial height **H_{R2}** of the second reinforced end portion **384** extends from the radially outer edge **327** to the radially inner edge **333** of the sipe blade **320.** In some implementations, the height **H_{R2}** corresponds to a radial height of conventional sipe blades. In another implementation, the height **H_{R2}** corresponds to the height **H_{R1}** of the first reinforced portion **334.** In an additional implementation, the height **H_{R2}** corresponds to the height **H_{RC}** of the central reinforced portion **364.**

A circumferential thickness **T_{R2}** of the second reinforced end portion **384** may be substantially constant along its height **H_{R2}.** In some implementations, the thickness **T_{R2}** is 1.0 mm. In further implementations, the thickness **T_{R2}** is one of greater than, less than, or substantially equal to the thickness **T_{R1}** of the first reinforced end portion **334.**

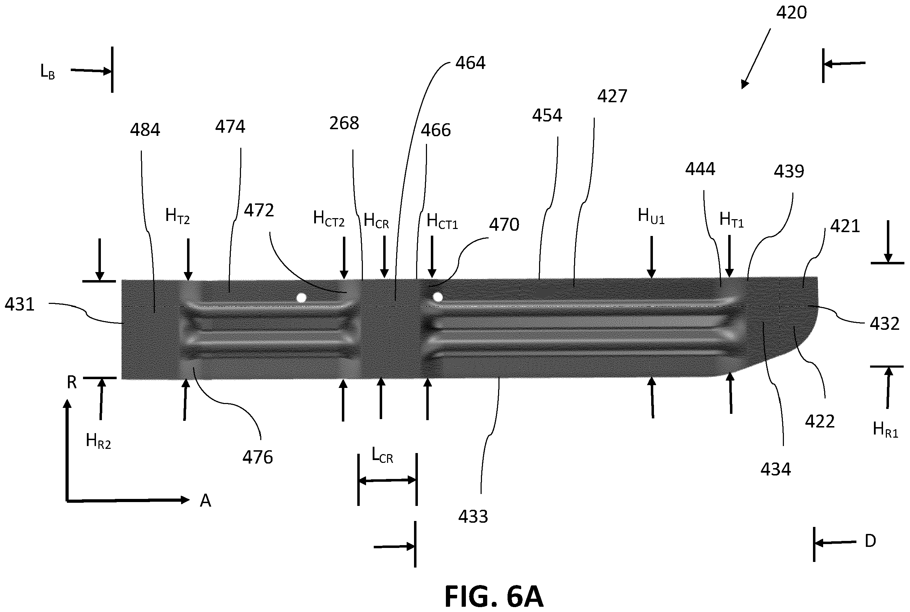

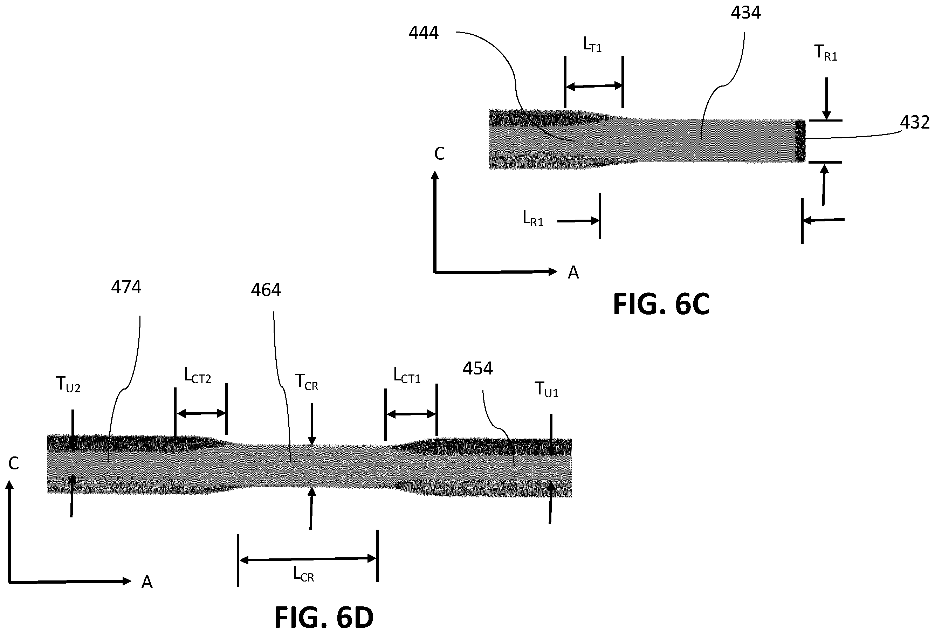

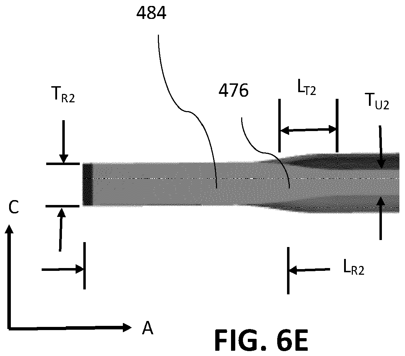

A fourth implementation of a reinforced sipe blade **420** is depicted in **FIGS. 6A-6E****.** In the figures, like numerals represent features corresponding structurally and functionally to features in the first, second, and third implementation. The sipe blade **420** combines the features of the first, second, and third implementations.

The sipe blade **420** may include a first reinforced end portion **434.** The first reinforced end portion **434** may comprise axially outer portions **421** and **422,** which require reinforcement, or an increased thickness, to prevent a material yield or a material failure during one or more of a tire production or a tire molding, including one or more of a tire mold casting, a tire mold casting, a tire de-molding, or the like.

The first reinforced end portion **434** has an axial length **L_{R1}** that extends from the axially outer edge **432** of the sipe blade **420** to a first axial demarcation line **439.** The first axial demarcation line **439** extends radially from the radially outer edge **427** to the radially inner edge of the sipe blade **420,** and indicates an axially inner boundary of the first reinforced end portion **434.** The first axial demarcation line **439** may be one of parallel to the radial direction **R** or biased relative to the radial direction **R.** The first axial demarcation line **439** may be one of parallel or biased relative to the axially outer edge **432.** If the first axial demarcation line **439** is biased relative to the axially outer edge **332,** then the length **L_{R1}** of the first reinforced end portion **434** may vary along a radial height of the sipe blade **420.**

The length **L_{R1}** of the first reinforced end portion **434** is less than an axial length **L_{B}** of the sipe blade **420.** The length **L_{B}** extends between the axially inner edge **431** and the axially outer edge **432** of the sipe blade **420.** In some implementations, the length **L_{B}** corresponds to a length of conventional sipe blades.

The radial height **H_{R1}** of the first reinforced end portion **434** extends from the radially outer edge **427** to the radially inner edge **433** of the sipe blade **420.** In some implementations, the height **H_{R1}** corresponds to a radial height of conventional sipe blades.

A circumferential thickness **T_{R1}** of the first reinforced end portion **434** may be substantially constant along its height **H_{R1}**. As the first reinforced end portion **434** is vulnerable to a failure, the thickness **T_{R1}** must be great enough to provide a desired strength and a durability to the sipe blade **420** at this portion **434.** In some implementations, the thickness **T_{R1}** is 1.0 mm.

A first tapered portion **444** extends axially inwardly from the first reinforced end portion **434** at the first axial demarcation line **439** to an axially outer end of a first unreinforced main portion **454,** which corresponds to its axial length **L_{T1}**. In some implementations, the length **L_{T1}** is 1.0 mm.

A radial height **H_{T1}** of the first tapered portion **444** extends from the radially outer edge **427** to the radially inner edge **433** of the sipe blade **420.** In some implementations, the height **H_{T1}** corresponds to the height **H_{R1}** of the first reinforced end portion **434.** In other implementations, the height **H_{T1}** is commensurate with a radial height of conventional sipe blades.

A circumferential thickness of the first tapered portion **444** decreases or "tapers" along its length **L_{T1}**. The thickness decreases from the thickness **T_{R1}** of the first reinforced end portion **434** to a thickness **T_{U1}** of the first unreinforced main portion **454,** wherein the thickness **T_{R1}** is greater than the thickness **T_{U1}**. The sipe blade **420** includes the first tapered portion **444** to avoid a stress concentration between the first reinforced end portion **434** and the first unreinforced main portion **454.** This gradual change in thickness more evenly distributes forces acting over an area of the first tapered portion **444,** which prevents a failure at the first tapered portion **444.** In some implementations, the thickness **T_{U1}** is 0.60 mm.

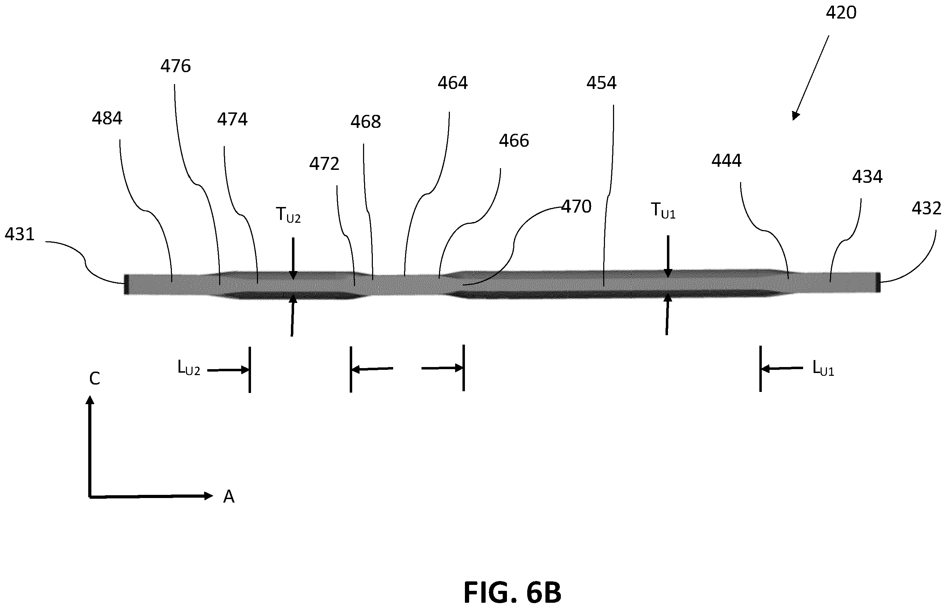

As illustrated in **FIGS. 6B** and **6C****,** the first unreinforced main portion **454** extends axially inwardly from an axially inner end of the first tapered portion **444.** An axial length **L_{U1}** of the first unreinforced main portion **454** extends axially inwardly from the axially inner end of the tapered portion **444** to about a central reinforced portion **464.**

The first unreinforced main portion **454** has a radial height **H_{U1}** that extends from the radially outer edge **427** to the radially inner edge **433** of the sipe blade **420.** In some implementations, the height **H_{U1}** corresponds to a radial height of conventional sipe blades.

The central reinforced portion **464** is substantially similar to the first reinforced end portion **434.** The term "central" in "central reinforced portion" indicates that the central reinforced portion **464** may be positioned at any location between the axially inner end of the first tapered portion **444** and the axially inner edge **431** of the sipe blade **420.** Its position is not required to be located at a midpoint of the length **L_{B}** of the sipe blade **420.**

The central reinforced portion **464** may have a first end **466** and a second end **468.** The first end **466** is positioned at an axially outer side of the central reinforced portion **464** and defines an axially outer boundary of the central reinforced portion **464.** The second end **268** is positioned at an axially inner side of the central reinforced portion **464** and defines an axially inner boundary of the central reinforced portion **464.**

An axial length **L_{CR}** of the central reinforced portion **464** extends from the first end **466** to the second end **468.** The length **L_{CR}** of the central reinforced portion **464** is less than the length **L_{B}** of the sipe blade **420.** Additionally, the length **L_{CR}** is one of greater than, less than, or substantially equal to the length **L_{R}** of the first reinforced end portion **434.**

The central reinforced portion **464** also has a radial height **H_{CR}** that extends from the radially outer edge **427** to the radially inner edge **433** of the sipe blade **420.** In some implementations, the height **H_{CR}** corresponds to a radial height of conventional sipe blades. In other implementations, the height **H_{CR}** is substantially equal to the height **H_{R}** of the first reinforced end portion.

A circumferential thickness **T_{CR}** of the central reinforced portion **464** may be substantially constant along its height **H_{CR}.** As the central reinforced portion **464** is vulnerable to a failure, the thickness **T_{CR}** must be great enough to provide a desired strength and a durability to the sipe blade **420** at this portion **464.** In some implementations, the thickness **T_{CR}** is 1.0 mm.

The central reinforced portion **464** may be separated from the first reinforced end portion **434** by an axial distance **D.** The distance **D** may be measured from the axially outer edge **432** of the sipe blade **420** to the first end **466** of the central reinforced portion **464.** The distance **D** is less than the length **L_{B}** of the sipe blade **420.**

A first central tapered portion **470** extends axially outwardly from the first end **466** of the central reinforced portion **464** to an axially inner end of the first unreinforced main portion **454.** The first central tapered portion **470** may have an axial length **L_{CT1}** that extends axially from the first end **466** of the central reinforced portion **464** to an axially inner end of the first unreinforced main portion **454.** In some implementations, the length **L_{CT1}** is 1.0 mm. In other implementations, the length **L_{CT1}** may be one of greater than, less than, or substantially equal to the length **L_{T1}** of the first tapered portion **244.**

A radial height **H_{CT1}** of the first central tapered portion **470** extends from the radially outer edge **427** to the radially inner edge **433** of the sipe blade **420.** In some implementations, the height **H_{CT1}** corresponds to the height **H_{R1}** of the first reinforced end portion **434.** In other implementations, the height **H_{CT1}** is commensurate with a radial height of conventional sipe blades.

A circumferential thickness of the first central tapered portion **470** decreases or "tapers" along its length **L_{CT1}.** The thickness decreases from the thickness **T_{CR}** of the central reinforced portion **464** to the thickness **T_{U1}** of the first unreinforced main portion **454,** wherein the thickness **T_{CR}** is greater than the thickness **T_{U1}**. The sipe blade **420** includes the first central tapered portion **470** to avoid a stress concentration between the first unreinforced main portion **454** and the central reinforced portion **464.** This gradual change in thickness more evenly distributes forces acting over an area of the first central tapered portion **470,** which prevents a failure at the first central tapered portion **470.** In some implementations, the thickness **T_{U1}** is 0.60 mm.

A second central tapered portion **472** extends axially inwardly from the second end **468** of the central reinforced portion **464** to an axially outer end of a second unreinforced main portion **474.** An axial length **L_{CT2}** of the second central tapered portion **472** extends from the second end **268** of the central reinforced portion **464** to an axially outer end of the second unreinforced main portion **474.** In some implementations, the length **L_{T}** is 1.0 mm. In other implementations, the length **L_{CT2}** is one of greater than, less than, or substantially equal to the length **L_{T}** of the tapered portion **444.** In further implementations, the length **L_{CT2}** is one of greater than, less than, or substantially equal to the length **L_{CT1}** of the first central tapered portion **470.**

A radial height **H_{CT2}** of the second central tapered portion **472** extends radially from the radially outer edge **427** to the radially inner edge **433** of the sipe blade **420.** In some implementations, the height **H_{CT2}** corresponds to the height **H_{CT1}** of the first central reinforced portion **464.** In other implementations, the height **H_{CT2}** corresponds to the height **H_{R1}** of the first reinforced end portion **434.** In further implementations, the height **H_{CT2}** is commensurate with a radial height of conventional sipe blades.

A circumferential thickness of the second central tapered portion **472** decreases or "tapers" along its length **L_{CT2}.** The thickness decreases from the thickness **T_{CR}** of the central reinforced portion **264** to a thickness **T_{U2}** of the second unreinforced main portion **484,** wherein the thickness **T_{CR}** is greater than the thickness **T_{U2}**. The sipe blade **420** includes the first second tapered portion **472** to avoid a stress concentration between the second unreinforced main portion **454** and the central reinforced portion **464.** This gradual change in thickness more evenly distributes forces acting over an area of the second central tapered portion **472,** which prevents a failure at the second central tapered portion **470.** In some implementations, the thickness **T_{U2}** is 0.60 mm. In other implementations, the thickness **T_{U2}** is one of greater than, less than, or substantially equal to the thickness **T_{U1}** of the first central tapered portion, but less than the thickness **T_{CR}** of the central reinforced portion **464** and the thickness **T_{R1}** of the first reinforced end portion **434.**

The second unreinforced main portion **474** extends axially inwardly from an axially inner end of the second central tapered portion **472** and comprises a remaining axial length **L_{U2}** of the sipe blade **420.** An axial length **L_{U2}** of the second unreinforced main portion **474** extends axially inwardly from the axially inner end of the second tapered portion **272** to the axially inner edge **432** of the sipe blade **420.** In other implementations, the length **L_{U2}** is one of greater than, less than, or substantially equal to the length **L_{U1}** of the first unreinforced end portion **454.**

The second unreinforced main portion **474** has a radial height **H_{U2}** that extends from the radially outer edge **427** to the radially inner edge **433** of the sipe blade **420.** In some implementations, the height **H_{U2}** corresponds to a radial height of conventional sipe blades.

The second tapered portion **476** extends axially inwardly from the second unreinforced main portion **474** to a second axial demarcation line **479,** which corresponds to its axial length **L_{T2}**. In some implementations, the length **L_{T2}** is 1.0 mm. The second axial demarcation line **479** extends radially from the radially outer edge **427** to the radially inner edge of the sipe blade **420,** and indicates an axially outer boundary of the second tapered portion **476.** The second axial demarcation line **479** may be one of parallel to the radial direction **R** or biased relative to the radial direction **R.** The second axial demarcation line **479** may be one of parallel or biased relative to the axially inner edge **433.** If the second axial demarcation line **479** is biased relative to the axially inner edge 433, then the length **L_{T2}** of the second tapered portion **476** may vary along a radial height of the sipe blade **420.**

A radial height **H_{T2}** of the second tapered portion **476** extends from the radially outer edge **427** to the radially inner edge **433** of the sipe blade **420.** In some implementations, the height **H_{T2}** corresponds to the height **H_{T1}** of the first tapered portion **444.** In other implementations, the height **H_{T2}** is commensurate with a radial height of conventional sipe blades.

A circumferential thickness of the second tapered portion **476** increases along its length **L_{T2}**. The length **L_{T2}** is measured from an axially inner end of the second unreinforced main portion **474** to the second axial demarcation line **479.** The thickness of the second tapered portion increases from a circumferential thickness **T_{U2}** of the second unreinforced main portion **474** to a circumferential thickness **T_{R2}** of a second reinforced end portion **484,** wherein the thickness **T_{R2}** is greater than the thickness **T_{U2}**. The sipe blade **420** includes the second tapered portion **476** to avoid a stress concentration between the second unreinforced main portion **474** and the second reinforced end portion **484.** This gradual change in thickness more evenly distributes forces acting over an area of the second tapered portion **476,** which prevents a failure at the second tapered portion **476.** In some implementations, the thickness **T_{U2}** is 0.60 mm. In other implementations, the thickness **T_{U2}** is one of substantially equal or equal to the thickness **T_{U1}** of the first unreinforced main portion **454.**

The second reinforced end portion **484** is substantially similar to the first reinforced end portion **434** and is positioned axially opposite relative to the first reinforced end portion **434** at an axially inner side of the sipe blade **420.** Reinforcement, or a greater thickness, of the sipe blade **420** at the second reinforced end portion **484** may be desired, for example, if a portion contiguous or proximate to the second reinforced end portion **484** is manufactured to have a thickness that is less than the thickness **T_{U2}** of the second unreinforced main portion **474.** Reinforcement, or a greater thickness, of the sipe blade **420** at the second reinforced end portion **484** may be also be desired to generally increase a structural robustness of the sipe blade **420.**

The second reinforced end portion **484** has an axial length **L_{R2}** that extends axially from the second axial demarcation line **479** to the axially inner edge **432** of the sipe blade **420.** If the second axial demarcation line **479** is biased relative to the axially outer edge **432,** then the length **L_{R2}** of the second reinforced end portion **434** may vary along a radial height of the sipe blade **420.**

The length **L_{R2}** of the second reinforced end portion **484** is less than the length **L_{B}** of the sipe blade **420.** In some implementations, the length **L_{B}** corresponds to a length of conventional sipe blades. In further implementations, the length **L_{R2}** is one of greater than, less than, or substantially equal to the length **L_{R1}** of the first reinforced end portion **434.**

A radial height **H_{R2}** of the second reinforced end portion **484** extends from the radially outer edge **427** to the radially inner edge **433** of the sipe blade **420.** In some implementations, the height **H_{R2}** corresponds to a radial height of conventional sipe blades. In another implementation, the height **H_{R2}** corresponds to the height **H_{R1}** of the first reinforced portion **434.** In an additional implementation, the height **H_{R2}** corresponds to the height **H_{RC}** of the central reinforced portion **464.**

A circumferential thickness **T_{R2}** of the second reinforced end portion **484** may be substantially constant along its height **H_{R2}.** In some implementations, the thickness **T_{R2}** is 1.0 mm. In further implementations, the thickness **T_{R2}** is one of greater than, less than, or substantially equal to the thickness **T_{R1}** of the first reinforced end portion **434.**

What have been described above are implementations. It is, of course, not possible to describe every conceivable combination of components or methods, but one of ordinary skill in the art will recognize that many further combinations and permutations are possible. Accordingly, the disclosure is intended to embrace all such alterations, modifications, and variations that fall within the scope of this application, including the appended claims. Additionally, where the disclosure or claims recite "a," "an," "a first," or "another" feature, or the equivalent thereof, it should be interpreted to include one or more than one such feature, neither requiring nor excluding two or more such features. As used herein, the term "includes" means includes but not limited to, and the term "including" means including but not limited to. The term "based on" means based at least in part on.

## Claims

1. A tire sipe blade (120, 220, 320, 420) comprising:
a mold engagement portion (123) and a molding portion (125) comprising:
a first reinforced end portion (134, 234, 334, 434) having a circumferential thickness (T_{R1});
a first tapered portion (144, 244, 344, 444) extending from the first reinforced end portion (134, 234, 334, 434) and having an axial length (L_{T1}); and
an unreinforced main portion (154, 254, 354, 454) extending from the first tapered portion (144, 244, 344, 444) and having a circumferential thickness (Tu);
wherein the thickness (T_{R1}) is greater than the thickness (Tu),
wherein a circumferential thickness of the first tapered portion (144, 244, 344, 444) decreases along its length (L_{T1}), from the first reinforced end portion (134, 234, 334, 434) to the unreinforced main portion (154, 254, 354, 454), from the thickness (T_{R1}) to the thickness (T_{U}).

2. The tire sipe blade (120, 220, 320, 420) of claim 1, wherein the first reinforced end portion (134, 234, 334, 434) includes a radial height (H_{R1}), and the thickness (T_{R1}) is constant along the height (H_{R1}).

3. The tire sipe blade (120, 220, 320, 420) of claim 1, wherein the unreinforced main portion (154, 254, 354, 454) includes a radial height (Hu), and the thickness (Tu) is constant along the height (Hu).

4. The tire sipe blade (120, 220, 320, 420) of claim 1, further comprising a central reinforced portion (264, 464), wherein the sipe blade (120, 220, 320, 420) has an axial length (L_{B}), wherein the central reinforced portion is separated from the first reinforced end portion (134, 234, 334, 434) by an axial distance (D), and wherein the distance (D) is less than the length (L_{B}).

5. The tire sipe blade (120, 220, 320, 420) of claim 4, wherein the central reinforced portion (264, 464) has a first end (266, 466) and a second end (268, 468),
wherein the first end (266, 466) has a first central tapered portion (270, 470) extending from the first end (266, 466) of the central reinforced portion (264, 464) to the unreinforced main portion (154, 254, 354, 454).

6. The tire sipe blade (120, 220, 320, 420) of claim 4, further comprising a second unreinforced main portion (274, 474), wherein the central reinforced portion (264, 464) has a first end (266, 466) and a second end (268, 468),
wherein the second end (268, 468) has a has a second central tapered portion (272, 472) extending from the second end (268, 468) of the central reinforced portion (264, 464) to the second unreinforced main portion (274, 474).

7. The tire sipe blade (120, 220, 320, 420) of claim 4, wherein the central reinforced portion (264, 464) has a circumferential thickness (T_{CR}), and wherein the thickness (T_{CR}) is greater than the thickness (T_{U}).

8. The tire sipe blade (120, 220, 320, 420) of claim 5, wherein the first central tapered portion (270, 470) has an axial length (L_{CT1}) and a circumferential thickness that decreases along its length (L_{CT1}), from the first end (266, 466) to the unreinforced main portion (154, 254, 354, 454).

9. The tire sipe blade (120, 220, 320, 420) of claim 8, wherein the central reinforced portion (264, 464) has a circumferential thickness (T_{CR}), and wherein the circumferential thickness decreases along its length (L_{CT1}) from the thickness (T_{CR}) to the thickness (T_{U}).

10. The tire sipe blade (120, 220, 320, 420) of claim 4, further comprising a second unreinforced main portion (274, 474), wherein the second central tapered portion (272, 472) has an axial length (L_{CT2}) and a circumferential thickness that decreases along its length (L_{CT2}), from the second end (268, 468) to the second unreinforced main portion (274, 474).

11. The tire sipe blade (120, 220, 320, 420) of claim 10, wherein the central reinforced portion (264, 464) has a circumferential thickness (T_{CR}), and wherein the circumferential thickness decreases along its length (L_{CT2}) from the thickness (T_{CR}) to the thickness (T_{U}).

12. The tire sipe blade (120, 220, 320, 420) of claim 5, wherein the central reinforced portion (264, 464) has a circumferential thickness (T_{CR}), and wherein the central reinforced portion (264, 464) includes a radial height (H_{CR}) and the thickness (T_{CR}) is constant along the height (H_{CR}).

13. The tire sipe blade (120, 220, 320, 420) of claim 6, wherein the central reinforced portion (264, 464) has a circumferential thickness (T_{CR}), and wherein the central reinforced portion (264, 464) includes a radial height (H_{CR}) and the thickness (T_{CR}) is constant along the height (H_{CR}).

14. The tire sipe blade (120, 220, 320, 420) of claim 4, further comprising a second unreinforced main portion (274, 474) having a thickness (T_{U2}), wherein the central reinforced portion (264, 464) has a circumferential thickness (T_{CR}), and wherein the thickness (T_{CR}) is greater than the thickness (T_{U2}).

15. The tire sipe blade (120, 220, 320, 420) of claim 14, wherein the thickness (T_{U2}) is equal to the thickness (Tu).
